# EUROPÄISCHE PATENTSCHRIFT

(11) **EP 0 386 195 B1**
(45) Veröffentlichungstag und Bekanntmachung des Hinweises auf die Patenterteilung: **29.09.1993**
(21) Anmeldenummer: 89909188.8
(22) Anmeldetag: 27.07.1989
(51) Int. Cl.: B23K 9/12, B65H 51/10, B05B 7/18

(54) **DRAHTPISTOLE**
WIRE GUN
PISTOLET A FIL METALLIQUE

(30) Priorität: 27.07.1988 DE 3825531
(43) Veröffentlichungstag der Anmeldung: 12.09.1990
(73) Patentinhaber: THE PERKIN-ELMER CORPORATION, Norwalk Connecticut 06432 (US)
(72) Erfinder: HERBER, Ralph, D-6500 Mainz (DE)
(74) Vertreter: Grünecker, Kinkeldey, Stockmair & Schwanhäusser Anwaltssozietät
(86) Internationale Anmeldenummer: EP8900887
(87) Internationale Veröffentlichungsnummer: WO9000951

(56) Entgegenhaltungen:
- BE-A- 746 454
- DE-A- 2 034 132
- DE-B- 1 032 448
- DE-C- 3 602 613
- DE-C- 3 623 292
- FR-A- 1 491 562
- US-A- 2 032 260
- US-A- 2 539 487
- US-A- 3 119 536
- US-A- 3 430 832
- US-A- 3 672 655
- US-A- 3 675 837

## Beschreibung

Die Erfindung betrifft eine Drahtpistole mit einer Vorschubeinrichtung für den Draht, einem von einem Motor angetriebenen Antriebsrad für den Draht und einer den Draht gegen das Antriebsrad drückenden Gegenrolle, wobei wenigstens die Drehachse der Gegenrolle einen Verstellbereich für die Anpassung der Vorschubeinrichtung an verschiedene Durchmesser des Drahtes aufweist.

Eine solche Drahtpistole findet vor allem beim sogenannten Flammspritzen Anwendung. Dabei wird der Draht durch die Vorschubeinrichtung in einen Gaskopf mit einer Spritzdüse transportiert. Im Gaskopf, dem ein brennbares Gas sowie Druckluft und Sauerstoff zugeführt werden, kommt es durch die Gasverbrennung zum Schmelzen und zur Zerstäubung des Drahtmaterials, das zusammen mit dem verbrannten Gas durch die Düse ausgestoßen wird.

Bekannte Drahtpistolen mit einer Vorschubeinrichtung haben den Nachteil, daß zur Anpassung an Drähte mit unterschiedlichem Durchmesser das Antriebsrad sowie die Gegenrolle ausgewechselt werden müssen. Dieses Auswechseln, bei dem das Gehäuse der Drahtpistole geöffnet und wieder verschlossen werden muß, ist sehr zeitaufwendig. Außerdem muß ständig ein Satz von Rädern zum Auswechseln bereitgehalten werden.

Bei bekannten Drahtfördereinrichtungen der obengenannten Art erfolgt eine solche Anpassung dadurch, daß die dem Drahtantriebsrad zugehörige Gegenrolle senkrecht zur Drahtvorschubrichtung verstellbar vorgesehen wird, und indem diese Rolle gegen den Draht durch eine entsprechende Einrichtung andrückbar ist.

Aus der US-A-3 119 536 ist eine Drahtfördereinrichtung mit einem Antriebsrad und einem Gegenrad bekannt, wobei das Gegenrad durch ein an einem Ende verschwenkbar gelagerten Hebel, auf dem eine Andruckrolle gelagert ist, senkrecht zur Drahtvorschubrichtung bewegbar und gegen den zu fördernden Draht andrückbar ist. Aus der US-A-3 430 832 ist eine Drahtfördereinrichtung bekannt, welche zwei Antriebsräder mit jeweils einem Gegenrad umfaßt. Die beiden Gegenräder sind auf einer gemeinsamen Trägereinrichtung gelagert, welche senkrecht zur Drahtvorschubrichtung durch eine Verstelleinrichtung verschiebbar ist. Die Verstelleinrichtung wirkt auf die gemeinsame Trägereinrichtung für die Gegenräder derart ein, daß die Gegenräder jeweils die gleiche Andruckkraft gegen den zu fördernden Draht ausüben.

Es ist die Aufgabe der vorliegenden Erfindung, eine neue Drahtpistole der eingangs erwähnten Art mit verbesserten Gebrauchseigenschaften zu schaffen.

Die Drahtpistole nach der Erfindung ist dadurch gekennzeichnet, daß für die Gegenrolle ein als Waagebalken ausgebildetes, entsprechend dem Verstellbereich bewegbares Lagerungselement vorgesehen ist, auf dem neben der Gegenrolle auch eine Andruckrolle für ein den Draht abtastendes Meßrad für die Messung der Drahtvorschubgeschwindigkeit gelagert ist, und daß eine an dem als Waagebalken ausgebildeten Lagerungselement angreifende, unter Verstellung des Angriffspunkts entlang dem Lagerungselement verschiebbare Andruckeinrichtung vorgesehen ist.

Durch diese erfindungsgemäße Lösung wird eine Drahtpistole mit einer Drahtfördereinrichtung geschaffen, welche an unterschiedliche Drahtdicken anpaßbar und dabei vorteilhaft mit einem Meßrad zur Messung der Vorschubgeschwindigkeit des zu fördernden Drahtes kombiniert ist. Durch die Verschiebbarkeit der Andruckeinrichtung läßt sich die Lastverteilung, mit der das Gegenrad gegen das Antriebsrad und die Andruckrolle gegen das Meßrad drückt, zur Optimierung der Drahtförderung einstellen.

In vorteilhafter Ausgestaltung der Erfindung kann für die übertragung des Antriebs vom Antriebsrad auf die Gegenrolle ein Getriebe vorgesehen werden, wobei das Getriebe zueckmäßig durch jeweils ein konzentrisch mit dem Antriebsrad bzw. der Gegenrolle verbundenes Zahnrad gebildet ist. Durch die übertragung des Antriebs wird die Zuverlässigkeit des Drahtvorschubs erhöht, indem die angetriebene Gegenrolle selbst mit zum Vorschub des Drahtes beiträgt.

Bei Verwendung von zwei konzentrisch mit dem Antriebsrad bzw. der Gegenrolle verbundenen Zahnrädern ist es besonders vorteilhaft, wenn die Verzahnung der Zahnräder das Bezugsprofil I nach DIN 3972 für die Zähnezahl 9 aufweist. Durch diese Verzahnung ist eine schlupffreie, kontinuierliche Antriebsübertr-agung innerhalb eines weiten Verstellbereichs der Radachsen möglich.

Das Lagerungselement kann zweckmäßig durch eine Lenkerverbindung mit der Wand des für die Drahtpistole vorgesehenen Gehäuses gehaltert sein.

Mit Hilfe des den Draht abtastenden Meßrades kann der Ist-Wert der Drahtvorschubgeschwindigkeit sehr genau gemessen werden. Dies ist eine wichtige Voraussetzung dafür, daß die Vorschubgeschwindigkeit wirksam geregelt werden kann.

Eine Regelung, insbesondere eine Schlupfregelung, kann nur dadurch erreicht werden, daß die Anpreßkraft, mit der der Draht gegen das Antriebsrad gedrückt wird, gesteuert wird. Die Veränderung der Anpreßkraft kann u.a. dadurch erfolgen, daß die Andruckvorrichtung, die als Druckzylinder mit veränderbarem Innendurck ausgebildet sein kann, längs des Trägerbalkens verschiebbar gelagert ist. Durch Verlagerung des Angriffspunktes der am Lagerbalken angreifenden Kraft sowie durch Variation des Zylinderdruckes ändert sich die von der Gegenrolle über den Draht auf das Antriebsrad übertragene Kraft.

Weitere Ausgestaltungsmöglichkeiten der Erfindung gehen aus den Unteransprüchen hervor.

Die Erfindung soll nun anhand von Ausführungsbeispielen und der beiliegenden Zeichnungen weiter erläutert und beschrieben werden. Es zeigen
- Fig. 1: ein Ausführungsbeispiel für eine erfindungsgemäße Drahtpistole mit einem Gaskopf für Flammspritzen,
- Fig. 2: ein Ausführungsbeispiel für die Vorschubeinrichtung einer erfindungsgemäßen Drahtpistole mit einem Getriebe zur übertragung des Antriebs vom Antriebsrad auf die Gegenrolle, und
- Fig. 3: ein weiteres Ausführungsbeispiel der erfindungsgemäßen Drahtpistole.

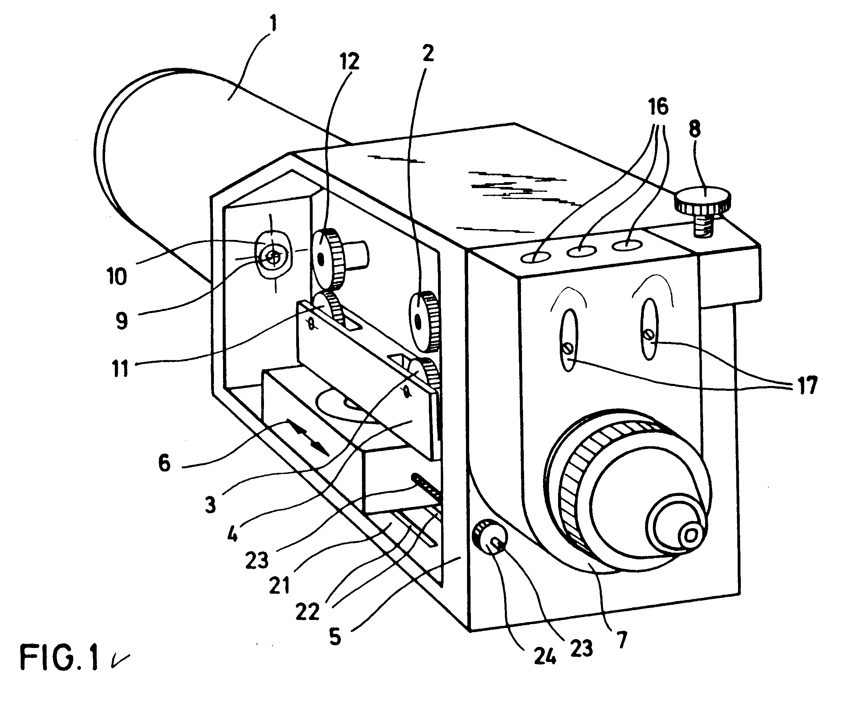

In Fig. 1 ist mit 1 der Motor zum Antrieb des Antriebsrades 2 bezeichnet. Der Draht wird durch die auf dem Lagerbalken 4 gelagerte Gegenrolle 3 gegen das Antriebsrad 2 gepreßt. Durch die Drehung des Antriebsrades wird der Draht in den Gaskopf 7 mit den Gaszuführungen 16 transportiert.

In dem vorliegenden Ausführungsbeispiel ist die Achse des Antriebsrades feststehend und durch die Wand eines für die Antriebsvorrichtung vorgesehenen separaten Gehäuses, das ein Teil des Pistolengehäuses ist, geführt. Der Lagerbalken ist gegen den Draht verstellbar gehaltert. Die Anpassung an unterschiedliche Drahtdurchmesser erfolgt durch Verstellung der im vorliegenden Fall als Druckzylinder ausgebildeten Andruckvorrichtung, die an dem als Waagebalken ausgebildeten Trägerelement 4 angreift.

Durch die feststehende Achse des Antriebsrades verändert sich die Lage der Längsachse des Drahtes, wenn sich der Drahtdurchmesser ändert. Dieser Verschiebung der Drahtlängsachse wird durch einen beweglichen Gaskopf 7 Rechnung getragen, der im vorliegenden Ausführungsbeispiel mit in Langlöchern geführten Schrauben am Gehäuse 5 befestigt und mittels einer Drehspindel 8 verschiebbar ist. Der Aufwand zur Anpassung der Gaskopfposition an unterschiedliche Lagen der Drahtlängsachsen ist gering im Vergleich zum früheren Aufwand der zum Wechsel der Antriebsräder erforderlich war.

Mit ebenso geringem Aufwand kann die Anpassung an unterschiedliche Lagen der Drahtlängsachse an der gegenüberliegenden Gehäusewand erfolgen, wo der Draht durch eine Durchführung 9 in das für die Vorschubeinrichtung vorgesehene Gehäuse geführt ist. Dazu können in die Gehäusewand einsetzbare Drahtzuführungen 10 mit Bohrlöchern 9, deren Durchmesser der Stärke des Drahtes und deren Bohrlochachse der erforderlichen Lage der Drahtlängsachse jeweils angepaßt ist, vorgesehen werden.

Im vorliegenden Ausführungsbeispiel ist auf dem als Trägerbalken ausgebildeten Lagerungselement für die Gegenrolle ein weiteres Rad 11 gelagert, das als Gegenrad für das Meßrad 12 dient. Mit Hilfe des Meßrades 12 wird der Ist-Wert der Vorschubgeschwindigkeit ermittelt, der einer Regeleinrichtung für die Regelung der Vorschubgeschwindigkeit zugeführt werden kann. Bei der Regelung der Vorschubgeschwindigkeit wird insbesondere zur Ausschaltung des Schlupfes zwischen dem Antriebsrad und dem Draht der Anpreßdruck der Gegenrolle gegen das Antriebsrad gesteuert. Diese Steuerung wird im vorliegenden Ausführungsbeispiel dadurch erreicht, daß die als Druckzylinder ausgebildete Andruckvorrichtung 6 einen variablen Innendruck aufweist und längs des Lagerbalkens verschiebbar gelagert ist, so daß unterschiedliche Angriffspunkte der Kraft am Waagebalken möglich sind, wobei die Anpreßkraft der Andruckvorrichtungen sich je nach Lage des Angriffspunktes unterschiedlich auf das Antriebs- und das Meßrad verteilt.

Wenn die Andrückvorrichtung 6 in horizontaler Richtung und in Längsrichtung des Waagebalkens 4 verschiebbar ausgebildet ist, sind hierfür zweckmäßigerweise in dem Boden 21 des Gehäuses 5 hinterschnittene Nuten 22 ausgebildet, in die nicht näher gezeigte, entsprechend angepaßte Federn vorstehen. Zur Verstellung der Andrückvorrichtung 6 in horizontaler Richtung kann sodann eine an der Andrückvorrichtung 6 befestigte Schraubenspindel 23 vorgesehen sein, die mit Hilfe eines auf der Vorderseite des Gehäuses in axialer Richtung der Schraubenspindel auf dem Gehäuse festgelegten, jedoch drehbaren Verstellrades 24 verstellt werden kann. Die Andrückvorrichtung 6 kann aber auch in gleicher Weise von Hand verstellbar sein oder sogar in Bezug auf das Gehäuse 5 feststehend angeordnet sein.

Denkbar wäre auch eine Andruckvorrichtung nur mit variabler Andruckkraft, die über ein Lagerelement und der darauf gelagerten Gegenrolle nur auf das Antriebsrad wirkt.

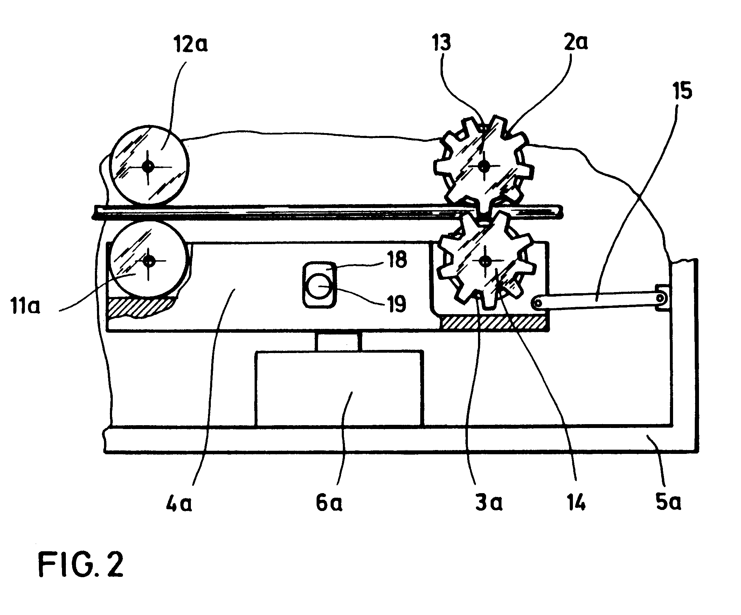

Bei der in der Fig. 2 dargestellten Vorschubeinrichtung ist ein Getriebe zur übertragung des Antriebs vom Antriebsrad 2a auf die Gegenrolle 3a vorgesehen. Durch diese Antriebsübertragung wird die Vorschubsicherheit, insbesondere bei geregelten Vorschubeinrichtungen, erhöht, indem das angetriebene Gegenrad unmittelbar mit zum Vorschub des Drahtes beiträgt.

Im vorliegenden Ausführungsbeispiel ist das Getriebe in Form zweier jeweils konzentrisch mit dem Antriebsrad bzw. der Gegenrolle verbundene Zahnräder 13 und 14 ausgebildet, die miteinander im Eingriff stehen. Der Eingriff bleibt innerhalb eines gewissen Verstellbereichs der Achse der Gegenrolle bestehen. Die Antriebsübertragung erfolgt insbesondere dann in einem weiten Verstellbereich schlupffrei und kontinuierlich, wenn die Zahnkränze der Zahnräder das Bezugsprofil I nach DIN 3972 für die Zähnezahl 9 aufweisen.

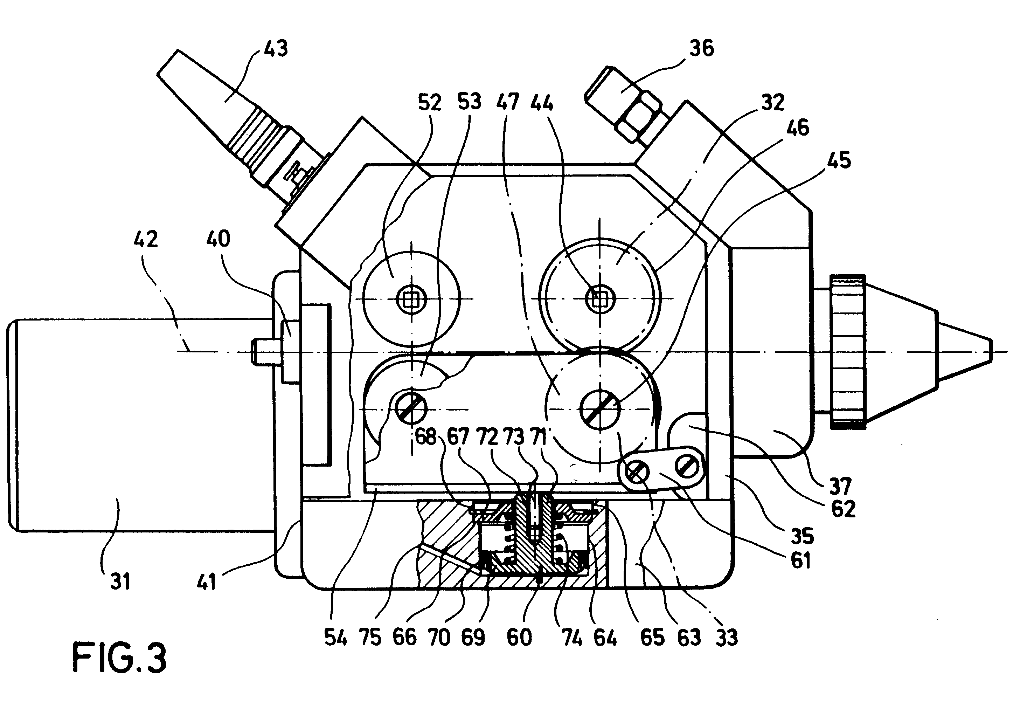

In Fig. 3 ist ein anderes Ausführungsbeispiel einer erfindungsgemänen Drahtpistole in seitlicher Ansicht dargestellt, wobei Teile der Seitenwand weggebrochen sind, um einen Blick auf die schematische Darstellung der Innenbauteile freizulegen und andere Teile im Schnitt dargestellt sind. An dem Gehäuse 35 ist auf der Rückseite ein Antriebsmotor 31 angeordnet, während auf der gegenüberliegenden Stirnseite des Gehäuses der Gaskopf 37 in vertikaler Richtung in Fig. 3 verstellbar an dem Gehäuse 35 gehaltert ist, wobei die Verstellvorrichtungen ähnlich den in Fig. 1 dargestellten Verstellvorrichtungen ausgebildet sein können. Auf der Rückseite 41 des Gehäuses ist eine Drahtzuführung 40 vorgesehen, durch die die Mittelachse 42 des durch die Drahtpistole geführten, nicht dargestellten Drahtes verläuft. Zur Veränderung dieser Mittellängsachse 82 kann die Drahtzuführung 40 ebenso wie der Gaskopf 7 in vertikaler Richtung, das heißt in der Bildebene der Fig. 3 verstellt werden. Mit 36 ist eine Gaszuführleitung bezeichnet, die Gas zu dem Gaskopf 7 führt. Der Einführstutzen 43 kann zur Einführung von elektrischen Zuleitungen dienen. Das Antriebsrad 32 für den Draht wirkt mit einer Gegenrolle 33 zusammen. Auf den zugeordneten Achsen 44, 45 des Antriebsrades bzw. der Gegenrolle sind jeweils noch miteinander kämmende, nicht näher gezeigte Zahnräder 46, 47 fest angeordnet. Weiterhin sind ebenfalls ein Meßrad 52 sowie ein weiteres Gegenrad 53 vorgesehen. Das Gegenrad 53 ist ebenso wie die Gegenrolle 33 auf einem Waagebalken 54 drehbar angeordnet, der einerseits auf dem allgemein mit 60 bezeichneten Druckkolben aufliegt und andererseits über eine Schwinge 61 mit einem feststehenden, fest mit dem Gehäuse 35 verbundenen Auflager 62 verbunden ist. Die Schwinge 61 ist sowohl an dem Auflager 62 wie an dem Waagebalken 54 verschwenkbar angelenkt.

Die allgemein mit 60 bezeichnete Andrückvorrichtung ist wie folgt aufgebaut: in dem Boden 63 ist eine Sackbohrung 64 ausgebildet, die an dem dem Sackende abgewandten Ende zu einer Bohrung 65 mit größerem Durchmesser aufgeweitet ist. Gegen die zwischen der Sackbohrung und dem aufgeweiteten Bohrungsteil 65 gebildete Schulter 66 liegt ein Haltering 67 an, der mit Hilfe eines Sprengringes 68 in dieser Lage festgelegt ist. In der Sackbohrung 64 ist ein umgedreht T-förmiges Kolbenteil 69 verschiebbar, das mit Hilfe eines 0-Ringes gegen die Innenwand der Sackbohrung abgedichtet ist. Der Stempel 71 des T-förmigen Kolbens steht durch eine zentrische öffnung in dem Haltering 67 nach aufwärts vor. In dem Stempel 71 ist eine in Längsrichtung des Stempels verlaufende Sackbohrung 72 ausgebildet, in die ein über den Stempel vorstehender Stößel 73 eingesetzt sein kann. Zwischen dem verbreiterten Teil des T-förmigen Kolbens 69 und der Unterseite des Halteringes 67 ist eine Schraubenfeder 74 angeordnet, die den T-förmigen Kolben nach abwärts gegen den Boden der Sackbohrung 64 vorspannt. Mit dem unteren Ende der Sackbohrung 64 ist weiterhin eine Zuleitung 75 für ein Druckfluid verbunden.

Die Andruckvorrichtung 60 arbeitet im wesentlichen derart, daß zum Anpressen des zu fördernden Drahtes unter Vermeidung eines Schlupfs Druckfluid in die Zuführleitung 75 gegeben wird. Hierdurch wird der T-förmige Kolben 69 gegen die Vorspannung der Feder 74 in Bezug auf den Haltering 67 nach aufwärts gedrückt, wodurch der auf dem oberen Ende dieses Kolbens liegende Waagebalken 54 in senkrechter Richtung angehoben wird bis die Gegenrolle 33 und die Rolle 53 gegen den zu fördernden, nicht dargestellten Draht angepreßt werden. Mit Hilfe des Druckes des Druckfluid, das auf die Leitung gegeben wird, kann dieser Anpreßdruck entsprechend gesteuert werden.

Im vorliegenden Ausführungsbeispiel ist das als Waagebalken 4a ausgebildete Lagerungselement durch einen Lenker 15 mit der Wand 5a des für die Vorschubeinrichtung vorgesehenen Gehäuses verbunden. Zur weiteren Führung des Trägerbalkens kann ein Führungsloch 18 im Trägerbalken vorgesehen werden, in das ein aus der Gehäusewand vorstehender Führungsstift 19 eingreifen kann.

## Patentansprüche

1. Drahtpistole mit einer Vorschubeinrichtung für den Draht, einem von einem Motor (1) angetriebenen Antriebsrad (2) für den Draht und einer den Draht gegen das Antriebsrad (2) drückenden Gegenrolle (3), wobei wenigstens die Drehachse der Gegenrolle (3) einen Verstellbereich für die Anpassung der Vorschubeinrichtung an verschiedene Durchmesser des Drahtes aufweist, **dadurch gekennzeichnet,** daß für die Gegenrolle ein als Waagebalken ausgebildetes, entsprechend dem Verstellbereich bewegbares Lagerungselement (4) vorgesehen ist, auf dem neben der Gegenrolle (3) auch eine Andruckrolle (11) für ein den Draht abtastendes Meßrad (12) für die Messung der Drahtvorschubgeschwindigkeit gelagert ist, und daß eine an dem als Waagebalken ausgebildeten Lagerungselement (4) angreifende, unter Verstellung des Angriffspunkts entlang dem Lagerungselement verschiebbare Andruckeinrichtung (6) vorgesehen ist.

2. Drahtpistole nach Anspruch 1, **dadurch gekennzeichnet,** daß ein Getriebe zur Übertragung des Antriebs vom Antriebsrad (2) auf die Gegenrolle (3) vorgesehen ist.

3. Drahtpistole nach Anspruch 2, **dadurch gekennzeichnet,** daß das Getriebe durch jeweils ein konzentrisch mit dem Antriebsrad (2) sowie der Gegenrolle (3) verbundenes Zahnrad (13, 14) gebildet ist.

4. Drahtpistole nach Anspruch 3, **dadurch gekennzeichnet,** daß die Verzahnung der Zahnräder das Bezugsprofil I nach DIN 3972 für die Zähnezahl 9 aufweist.

5. Drahtpistole nach einem der Ansprüche 1 bis 4, **dadurch** **gekennzeichnet,** daß zwischen dem Lagerungselement (4) und einem für die Drahtpistole vorgesehenen Gehäuse (5) eine Verbindung durch einen Lenker (15) hergestellt ist.

6. Drahtpistole nach einem der Ansprüche 1 bis 5, **dadurch** **gekennzeichnet,** daß die Andruckeinrichtung (6) als Druckzylinder ausgebildet ist.

7. Drahtpistole nach einem der Ansprüche 1 bis 6, **dadurch** **gekennzeichnet,** daß der Draht durch die Vorschubeinrichtung in einen Gaskopf (7) für Flammspritzen geführt ist, und daß die Position des Gaskopfes (7) an die unterschiedliche Lage der Drahtlängsachse von Drähten mit verschiedenem Durchmesser anpaßbar ist.

8. Drahtpistole nach Anspruch 7, **dadurch gekennzeichnet,** daß die Stellung des Gaskopfes (7) mit Hilfe einer Spindel (8) verstellbar ist.

## Claims

1. Wire gun having a feed device for the wire, a drive wheel (2) for the wire, driven by a motor (1), and a counter-roller (3) forcing the wire against the drive wheel (2), at least the rotational axis of the counter-roller (3) exhibiting an adjustment range for the adaptation of the feed device to different diameters of the wire, characterised in that for the counter-roller there is provided a bearing element (4) which is configured as a balance beam and is movable in accordance with the adjustment range and on which, in addition to the counter-roller (3), there is also mounted a pressure roller (11) for a wire-scanning measuring wheel (12) for measuring the wire-feed velocity, and in that a pressure device (6) is provided, which acts upon the bearing element (4) configured as a balance beam and is displaceable along the bearing element as the point of application is adjusted.

2. Wire gun according to Claim 1, characterised in that a gear system is provided for transmitting the drive from the drive wheel (2) to the counter-roller (3).

3. Wire gun according to Claim 2, characterised in that the gear system is formed by, in each case, a gearwheel (13, 14) connected concentrically to the drive wheel (2) and to the counter-roller (3).

4. Wire gun according to Claim 3, characterised in that the toothing of the gearwheels exhibits the basic profile I according to DIN 3972 for the diametral pitch 9.

5. Wire gun according to one of Claims 1 to 4, characterised in that, between the bearing element (4) and a housing (5) provided for the wire gun, a connection is created by a connecting rod (15).

6. Wire gun according to one of Claims 1 to 5, characterised in that the pressure device (6) is configured as a pressure cylinder.

7. Wire gun according to one of Claims 1 to 6, characterised in that the wire is guided by the feed device into a gas head (7) for flame sprays and in that the position of the gas head (7) is adaptable to the varying location of the longitudinal axis of wires of different diameter.

8. Wire gun according to Claim 7, characterised in that the position of the gas head (7) is adjustable by means of a spindle (8).

## Revendications

1. Pistolet à fil avec un dispositif d'avancement pour le fil, une roue d'entraînement (2) commandée par un moteur (1) pour le fil, et une contre-molette (3) pressant le fil contre la roue d'entraînement (2), dans lequel au moins l'axe de rotation de la contre-molette (3) présente une plage de réglage pour l'adaptation du dispositif d'avancement à différents diamètres du fil, caractérisé en ce qu'il est prévu, pour la contre-molette, un élément de support (4) mobile réalisé sous la forme d'un fléau et correspondant à la plage de réglage, sur lequel est montée, outre la contre-molette (3), également un galet-presseur (11) pour une roue de mesure (12) destinée à palper le fil pour mesurer la vitesse d'avancement du fil, et en ce qu'il est prévu, sur l'élément de support (4) réalisé sous la forme d'un fléau, un dispositif de pression (6) mobile le long de l'élément de support pour déplacer le point d'application de la force.

2. Pistolet à fil selon la revendication 1, caractérisé en ce qu'il est prévu un engrenage pour la transmission du mouvement de la roue d'entraînement (2) à la contre-molette (3).

3. Pistolet à fil selon la revendication 2, caractérisé en ce que l'engrenage est constitué par une roue dentée (13, 14) reliée chaque fois de manière concentrique à la roue d'entraînement (2) ainsi qu'à la contre-molette (3).

4. Pistolet à fil selon la revendication 3, caractérisé en ce que la denture des roues dentées présente le profil de référence I selon DIN 3972 pour le nombre de dents de 9.

5. Pistolet à fil selon l'une quelconque des revendications 1 à 4, caractérisé en ce que, entre l'élément de support (4) et un carter (5) prévu pour le pistolet à fil, une liaison est établie au moyen d'un bras oscillant (15).

6. Pistolet à fil selon l'une quelconque des revendications 1 à 5, caractérisé en ce que le dispositif de pression (6) est réalisé sous la forme d'un vérin de pression.

7. Pistolet à fil selon l'une quelconque des revendications 1 à 6, caractérisé en ce que le fil est guidé par le dispositif d'avancement dans une tête à gaz (7) pour la projection à la flamme et en ce que la position de la tête à gaz (7) est adaptable à la position différente de l'axe longitudinal de fils ayant des diamètres différents.

8. Pistolet à fil selon la revendication 7, caractérisé en ce que la position de la tête à gaz (7) est réglable à l'aide d'une tige (8).
